# FASCICULE DE BREVET EUROPEEN

(11) **EP 0 538 131 B1**
(45) Date de publication et mention de la délivrance du brevet: **15.05.1996**
(21) Numéro de dépôt: 92402818.6
(22) Date de dépôt: 15.10.1992
(51) Int. Cl.: B60H 1/22

(54) **Installation de chauffage de l'habitacle d'un véhicule automobile, notamment d'un véhicule à propulsion électrique**
Vorrichtung zur Heizung des Fahrgastraums eines Kraftfahrzeuge, insbesondere für einen elektrischen Wagen
Heating device for a motor vehicle interior compartment, particularly for an electric powered vehicle

(30) Priorité: 15.10.1991 FR 9112692
(43) Date de publication de la demande: 21.04.1993
(73) Titulaire: Valeo Climatisation, F-78321 La Verrière (FR)
(72) Inventeur: Sarbach, Jean-Charles, F-78690 Les Essarts le Roi (FR)
(74) Mandataire: Gamonal, Didier

(56) Documents cités:
- EP-A- 0 243 077
- EP-A- 0 275 720
- FR-A- 2 214 605
- FR-A- 2 392 521
- US-A- 3 673 379
- US-A- 4 459 466
- PATENT ABSTRACTS OF JAPAN vol. 15, no. 228 (M-1123)11 Juin 1991 & JP-A-03 070 621 ( NIPPON DENSO ) 26 MARS 1991
- PATENT ABSTRACTS OF JAPAN vol. 14, no. 221 (M-971)(4164) 10 Mai 1990 & JP-A-02 053 628 ( TEXAS INSTR JAPAN LTD) 22 FEVRIER 1990

## Description

L'invention concerne une installation de chauffage de l'habitacle d'un véhicule automobile et notamment d'un véhicule à propulsion électrique.

Dans un véhicule automobile classique, propulsé par un moteur à combustion interne, le chauffage de l'habitacle est obtenu en récupérant une partie de l'énergie thermique dissipée par le moteur.

Dans ce cas, le chauffage est généralement assuré par une installation du type comprenant une entrée d'air munie d'un pulseur d'air, une sortie d'air alimentant au moins une conduite de sortie débouchant dans l'habitacle, une branche de transmission d'air interposée entre l'entrée d'air et la sortie d'air, une branche de réchauffage d'air interposée entre l'entrée d'air et la sortie d'air et contenant des moyens de chauffage, ainsi qu'un volet de mixage propre à répartir un flux d'air entre les deux branches précitées.

Dans un véhicule automobile à moteur à combustion interne, les moyens de chauffage de l'installation sont alors constitués par un échangeur de chaleur alimenté par le liquide de refroidissement du moteur et traversé par un flux d'air qui est envoyé dans l'habitacle.

Dans le cas d'un véhicule automobile propulsé par un moteur électrique, alimenté par une source de tension électrique embarquée, c'est-à-dire des batteries, il est connu d'assurer le chauffage de l'habitacle par une ou plusieurs résistances électriques alimentées par les batteries et traversées par un flux d'air envoyé dans l'habitacle par un pulseur.

Ces résistances posent des problèmes de sécurité thermique du fait que, lorsque le flux d'air est arrêté, la puissance des résistances ne peut pas être dissipée sous forme thermique ; celles-ci nécessitent d'être munies d'un contrôle de puissance électrique.

Pour éviter ces inconvénients, le chauffage de l'habitacle des véhicules automobiles à propulsion électrique est le plus souvent assurée par un brûleur à essence.

Si cette solution a pour avantage de ne pas pénaliser l'autonomie du véhicule, elle présente néanmoins certains inconvénients. Tout d'abord, elle nécessite deux sources d'énergie différentes embarquées sur le véhicule et, en outre, la présence d'un brûleur à essence est une source de nuisance, en particulier de pollution.

L'invention a notamment pour but de remédier aux inconvénients précités.

C'est en particulier un but de l'invention de procurer une installation de chauffage de l'habitacle d'un véhicule automobile qui convient tout particulièrement aux véhicules à propulsion électrique.

C'est encore un but de l'invention de procurer une installation de chauffage qui minimise les dépenses d'énergie, tout en fournissant un niveau de confort suffisant, sans entraîner de pollution.

C'est encore un but de l'invention de procurer une telle installation de chauffage qui, lorsqu'elle est appliquée à un véhicule à propulsion électrique, ne pénalise pratiquement pas l'autonomie de celui-ci.

L'invention propose à cet effet une installation de chauffage de l'habitacle d'un véhicule automobile, du type défini en introduction, installation dans laquelle les moyens de chauffage comprennent un radiateur de chauffage à résistance CTP (coefficient de température positif) propre à être alimenté par une source de tension embarquée sur le véhicule et un radiateur de préchauffage propre à être alimenté par une source de tension extérieure lorsque le véhicule est stationné.

L'utilisation d'un radiateur de chauffage à résistance CTP permet d'adapter la puissance électrique consommée à la puissance thermique désirée, et cela sans moyen de contrôle supplémentaire. En effet, une baisse du débit d'air dans la branche de réchauffage entraîne une hausse de la température du radiateur de chauffage, d'où une augmentation de la valeur de la résistance CTP et, par conséquent, une baisse de la puissance électrique consommée, ce qui entraîne une auto-limitation de la puissance consommée.

Le réglage du débit d'air dans la branche de réchauffage peut être ajusté notamment à l'aide du volet de mixage de l'installation.

Comme l'installation comprend en outre un radiateur de préchauffage propre à être alimenté par une source de tension extérieure, c'est-à-dire sur le secteur lorsque le véhicule est stationné, il est possible, par temps froid, de démarrer avec un véhicule dont l'habitacle a été préchauffé et cela sans prélever d'énergie sur les batteries embarquées dans le véhicule.

Selon une autre caractéristique de l'invention, le radiateur de préchauffage est également de type à résistance CTP, ce qui permet d'obtenir aussi un effet d'auto-limitation de la puissance consommée.

Dans une première forme de réalisation de l'invention, le radiateur de chauffage et le radiateur de préchauffage sont deux radiateurs distincts, disposés en série dans la branche de réchauffage d'air par rapport au sens d'écoulement du flux d'air.

Dans une autre forme de réalisation de l'invention, le radiateur de chauffage et le radiateur de préchauffage sont réalisés sous la forme d'un seul radiateur à résistance CTP qui peut être alimenté soit sur une source de courant continu embarquée sur le véhicule, soit sur une source de courant alternatif, extérieure au véhicule, par l'intermédiaire d'un redresseur de courant.

Selon une autre caractéristique de l'invention, l'installation comprend un capteur de température disposé dans l'entrée d'air pour fournir un signal électrique représentatif de la température détectée et le pulseur est piloté en tension par un module de commande en fonction du signal électrique reçu, de telle sorte que la tension appliquée au pulseur -et, par conséquent, le débit d'air qu'il fournit- diminue lorsque la valeur de température détectée descend en-dessous d'un seuil déterminé.

On peut ainsi, par temps froid, diminuer le débit d'air à travers la branche de réchauffage de l'installation et, par conséquent, la puissance électrique consommée, et cela du fait de la caractéristique CTP du radiateur de chauffage.

Selon une autre caractéristique de l'invention, la résistance CTP du radiateur de chauffage est choisie de telle sorte qu'elle présente une courbe caractéristique représentative de la variation de la résistance en fonction de la température qui comporte un premier domaine dans lequel la valeur de la résistance est sensiblement constante dans un premier intervalle de température et un deuxième domaine dans lequel la valeur de la résistance augmente très fortement dans un second intervalle de température, les deux domaines précités étant reliés par un coude, la résistance CTP du radiateur de chauffage étant choisie de telle sorte que son point de fonctionnement soit proche du coude de la courbe.

De ce fait, lorsque la température de l'air entrant dans l'installation diminue, on évite une chute trop brutale de la résistance qui provoquerait une augmentation importante de la puissance consommée.

Dans une forme de réalisation préférée de l'invention, l'installation comprend un module électronique de gestion relié, en entrée, à un interrupteur de chauffage, à un interrupteur de préchauffage, à une commande de la tension du pulseur d'air, à une horloge de programmation du préchauffage et à un capteur de température d'air et relié, en sortie, à un contacteur de chauffage, à un contacteur de préchauffage et à un module de commande du pulseur.

Ce module électronique de gestion est réalisé de telle sorte que, l'interrupteur de chauffage étant ouvert, le pulseur d'air peut être commandé manuellement sur une plage de commande totale et que, l'interrupteur de chauffage étant fermé, le pulseur peut être commandé manuellement sur une plaque dépendant de la température détectée par le capteur de température de manière à limiter le débit d'air du pulseur dès que la valeur de la température détectée descend en-dessous d'un certain seuil et que, l'interrupteur de préchauffage étant fermé et l'horloge de programmation étant déclenchée, le pulseur peut être commandé manuellement sur une plage dépendant de la température détectée.

Grâce à ces caractéristiques, on limite le débit d'air dans la branche de réchauffage d'air, lorsque l'installation est en mode chauffage ou en mode préchauffage et, par conséquent, la consommation d'énergie électrique. Par le même moyen on maintient ainsi la température d'air soufflé au-dessus d'un certain seuil estimé de confort.

Selon une autre caractéristique de l'invention, le module électronique de gestion est opératoire pour enclencher le contacteur de chauffage lorsque l'interrupteur de chauffage est fermé et pour enclencher le contacteur de préchauffage lorsque l'interrupteur de préchauffage est fermé et que l'horloge de programmation de préchauffage est déclenchée.

Dans une forme de réalisation préférée de l'invention, l'installation comprend en outre une conduite d'admission d'air extérieur et une conduite d'admission d'air recyclé qui alimentent toutes deux l'entrée d'air, un volet d'entrée d'air étant prévu pour fermer sélectivement l'une ou l'autre des deux conduites précitées.

Conformément à l'invention, le module électronique de commande est relié en outre, en entrée, à un interrupteur air extérieur/air recyclé et, en sortie, à un motoréducteur de commande du volet d'entrée d'air. Le module électronique est réalisé de telle sorte que le volet obture la conduite d'admission d'air extérieur lorsque l'interrupteur de chauffage et/ou l'interrupteur de préchauffage sont fermés et que le volet obture la conduite d'admission d'air extérieur et/ou la conduite d'admission d'air recyclé dans les autres conditions, selon le choix de l'utilisateur.

Dans la description qui suit, faite seulement à titre d'exemple, on se réfère aux dessins annexés, sur lesquels :
- la figure 1 est une représentation schématique d'une installation de chauffage de l'habitacle d'un véhicule automobile conformément à l'invention ;
- la figure 2 est un graphique représentant les variations de la valeur d'une résistance CTP en fonction de la température de la résistance;
- la figure 3 est un graphique montrant les variations de la puissance électrique consommée par une résistance CTP dans une installation de chauffage de l'invention, en fonction de la température d'entrée d'air ;
- la figure 4 est un graphique représentant les variations de la puissance électrique consommée en fonction de la température d'entrée d'air ;
- la figure 5 est une représentation schématique du module électronique de gestion de l'installation de l'invention ;
- la figure 6 est un graphique représentant les variations de la tension de commande du pulseur d'air en fonction de la température d'entrée d'air ; et
- la figure 7 est une représentation schématique d'une partie d'un schéma électrique de montage d'une installation selon l'invention, dans une variante de réalisation.

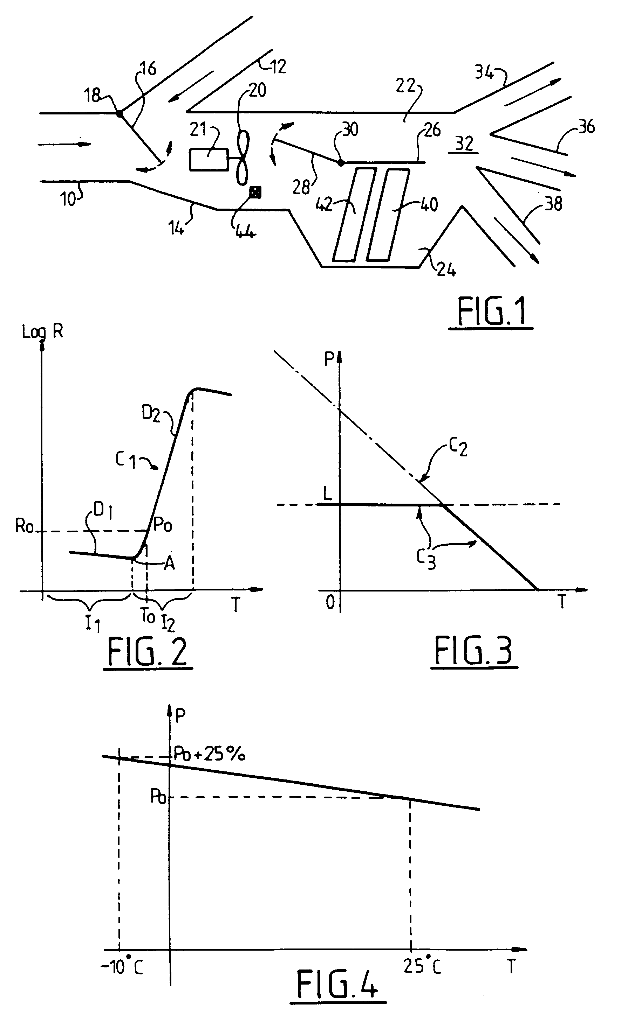

L'installation de chauffage représentée schématiquement à la figure 1 comprend une conduite 10 d'admission d'air extérieur et une conduite 12 d'admission d'air recyclé qui débouchent dans une entrée d'air 14. Un volet d'entrée d'air 16 monté pivotant autour d'un axe 18 permet d'alimenter l'entrée d'air 14, soit avec de l'air prélevé à l'extérieur du véhicule automobile, soit avec de l'air recyclé provenant de l'habitacle du véhicule, soit par un mélange de deux. Dans l'exemple, le volet 16 est motorisé, son pivotement étant commandé par un micro-moteur, non représenté.

L'entrée d'air 14 est munie intérieurement d'un pulseur d'air 20 entraîné par un moteur électrique 21 dont la tension est ajustable pour régler le débit d'air dans l'installation. L'entrée d'air 14 débouche ensuite en parallèle sur une branche de transmission d'air 22 et sur une branche de réchauffage d'air 24, les branches 22 et 24 étant séparées par une cloison 26. Un volet de mixage 28, monté à rotation autour d'un axe 30, est disposé en amont de la cloison 26 pour permettre d'ajuster la répartition du flux d'air entre les deux branches 22 et 24. Les branches 22 et 24 se rejoignent, en aval de la cloison 26, pour former une sortie d'air 32 où les flux d'air issus des deux branches se rejoignent et se mélangent. La sortie 32 alimente trois conduites de sortie 34, 36 et 38 débouchant dans l'habitacle. Dans l'exemple, la conduite 34 aboutit à une bouche de dégivrage/désembuage du pare-brise, la conduite 36 a une bouche située sur la planche de bord du véhicule et la conduite 38 a une bouche orientée vers la partie inférieure de l'habitacle. La structure générale de l'installation, telle qu'elle vient d'être décrite, est connue dans des véhicules à moteur à combustion interne. En pareil cas, la branche de réchauffage d'air 24 est munie d'un échangeur de chaleur alimenté par le liquide de refroidissement du moteur.

Conformément à l'invention, la branche de réchauffage d'air 24 contient un radiateur électrique de chauffage 40 à résistance CTP (coefficient de température positif) propre à être alimenté par une source de tension continue (non représentée) embarquée sur le véhicule. La branche 24 contient en outre un radiateur électrique de préchauffage 42 propre à être alimentée par une source de tension extérieure, par exemple le secteur 220 V alternatif, lorsque le véhicule est stationné. Dans l'exemple, le radiateur de préchauffage 42 est également du type à résistance CTP. Les radiateurs 40 et 42 sont deux radiateurs distincts disposés en série dans la branche 24 par rapport au sens d'écoulement du flux d'air, le radiateur 42 étant en amont du radiateur 40 dans l'exemple considéré.

Comme montré à la figure 1, l'installation comprend en outre un capteur de température 44 disposé dans l'entrée d'air 14 pour détecter la valeur de la température pénétrant dans l'installation et dont la fonction sera explicitée plus loin.

On comprendra que le volet de mixage 28 permet de répartir le flux d'air entre les branches 22 et 24 pour ajuster la température de l'air envoyé au travers des conduites de sortie 34, 36 et 38. Le chauffage de l'air circulant dans la branche de réchauffage 24 est assuré par le radiateur de chauffage 40 lorsque le véhicule circule, ce qui signifie que l'énergie de chauffage est prélevée sur la source de tension embarquée.

Lorsque le véhicule est en stationnement, il est normalement branché sur une source de tension extérieure pour assurer la recharge des batteries. Il est possible également d'assurer le préchauffage de l'habitacle par le radiateur de préchauffage 42, comme on le verra plus loin.

Comme mentionné, les radiateurs 40 et 42 sont chacun du type à résistance CTP. On connaît déjà, par exemple d'après le document EP-A-204393 un appareil de chauffage domestique comportant des résistances de ce type.

Dans un appareil de chauffage à résistance classique, la valeur de la résistivité -donc de la résistance- ne varie pratiquement pas en fonction de la température.

Par contre, dans un appareil à résistance du type CTP, la valeur de la résistance varie en fonction de la température, comme le montre la figure 2 qui représente une courbe C₁ représentant l'évolution du logarithme de la résistance (Log R) en fonction de la température (T). Dans un premier intervalle de température (I₁), la courbe C₁ présente un premier domaine (D₁) dans lequel la résistance est pratiquement constante. Dans un deuxième intervalle de température (I₂) supérieur à I₁, la courbe C₁ présente un second domaine D₂ dans lequel la résistance augmente très fortement avec la température. Les domaines D₁ et D₂ sont reliés par un coude A.

Comme l'installation de l'invention comporte un radiateur de chauffage 40 à résistance CTP, il est possible de choisir les caractéristiques de cette résistance en fonction des spécifications requises pour l'installation. Lorsque la résistance CTP du radiateur 40 est à une température T₀ (figure 2), on se trouve en un point P₀ de la courbe C₁ qui correspond à une valeur R₀ de la résistance. Si l'on diminue le débit d'air dans la branche 24, la température de la résistance va augmenter et la valeur de la résistance va augmenter très fortement, dès lors que la température de fonctionnement de la résistance se situe dans l'intervalle I₂.

De même, si l'on augmente le débit d'air dans la branche 24, la température de fonctionnement de la résistance va diminuer et la valeur de la résistance diminuer, et cela tant que l'on se trouve dans l'intervalle I₂. Dans le premier cas, l'augmentation de la résistance se traduit par une diminution de la puissance consommée, tandis que, dans le second cas, la diminution de la résistance se traduit par une augmentation de la puissance consommée. Comme les deux domaines D₁ et D₂ de la courbe C₁ (figure 2) sont reliés par un coude A, il est avantageux que la résistance CTP soit choisie de telle sorte que son point de fonctionnement P₀ soit proche du coude. Dans ces conditions, lorsque le débit d'air dans la branche 24 augmente et que la température de fonctionnement de la résistance I₁ diminue, cette température arrive dans l'intervalle I1 dans lequel la valeur de la résistance est pratiquement stabilisée. Il en résulte que la puissance électrique consommée est alors auto-limitée et ne peut dépasser un seuil déterminé.

On se réfère maintenant à la figure 3 qui montre un graphique puissance/température extérieure. Sur ce graphique, on a représenté une courbe C2 qui traduit le besoin de puissance en fonction de la température extérieure. Il s'agit d'une courbe linéaire qui montre que, plus la température extérieure baisse, plus le besoin de puissance est élevé.

La figure 3 représente également une courbe C3 traduisant la puissance électrique consommée par une résistance CTP dans une installation selon l'invention. Grâce à cette résistance, on peut limiter la puissance électrique consommée à une valeur L dans un premier intervalle de température et, ensuite, avoir une puissance électrique consommée correspondant exactement aux besoins, la deuxième partie de la courbe C3 étant superposée avec la courbe C2.

On évite ainsi une consommation électrique trop élevée.

En choisissant un point de fonctionnement P₀ de la résistance CTP, proche du coude A de la courbe (figure 2), et cela pour une température d'entrée d'air modérée (25°C), l'allure de la puissance consommée est représentée à la figure 4.

Pour une puissance P₀ à une température d'entrée d'air de 25°C, la puissance électrique consommée, pour une température d'entrée d'air de -10°C, est de P₀+25 %.

Il résulte donc des courbes précédentes que l'utilisation d'un radiateur électrique à résistance CTP permet d'auto-limiter la puissance électrique consommée par temps froid.

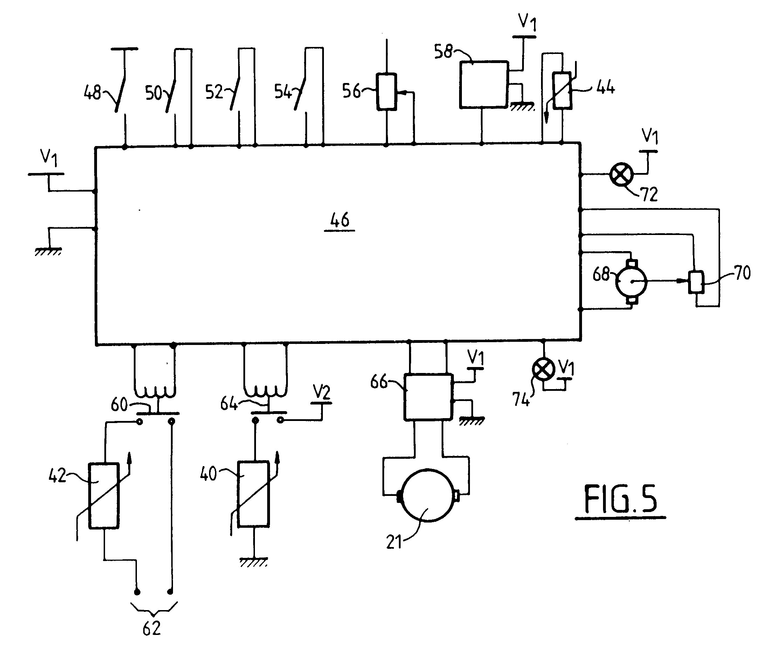

On se réfère maintenant à la figure 5 qui montre le schéma de montage des composants d'une installation selon l'invention.

L'installation représentée à la figure 1 est destinée à équiper un véhicule automobile électrique équipé de batteries qui délivrent d'une part une basse tension continue V1, par exemple de 12 V et, d'autre part, une haute tension continue V2, par exemple de 110 V. La tension V1 est destinée à l'alimentation des accessoires habituels du véhicule automobile, tandis que la tension V2 est destinée à l'alimentation du moteur électrique de propulsion du véhicule et également à l'alimentation du radiateur de chauffage 40.

Comme représenté à la figure 5, l'installation comprend un module électronique de gestion 46 alimenté sur la tension V1. Ce module est relié, en entrée, à un interrupteur 48 de contact à réseau alimenté sur la tension V1, à un interrupteur de chauffage 50, à un interrupteur de préchauffage 52, à un interrupteur air extérieur/air recyclé 54, à une commande 56 de la tension du pulseur 22, à une horloge 58 de programmation de préchauffage et au capteur 44 de température.

En sortie, le module 46 est relié à un contacteur de préchauffage 60 monté sur le circuit d'alimentation du radiateur de préchauffage 42, ce dernier étant muni d'une prise 62 d'alimentation sur le secteur alternatif 220 V. Le module 46 est en outre relié en sortie à un contacteur de chauffage 64 monté sur le circuit d'alimentation du radiateur de chauffage 40, ce dernier étant propre à être alimenté par la tension V2. Le module 46 est en outre relié, en sortie, à un module de commande 66 agissant sur le moteur 21 du pulseur 20 et alimenté à la tension V1, à un motoréducteur 68 actionnant le volet d'entrée d'air 16 (figure 1), ce motoréducteur agissant sur un dispositif de recopie 70. En outre, le module électronique de gestion est relié à un voyant de préchauffage 72 et un voyant de chauffage 74, tous deux alimentés à la tension V1.

Le module électronique de gestion 46 est réalisé à partir de composants électroniques connus et fonctionne de la façon suivante.

Par temps chaud, l'interrupteur 48 de contact réseau étant fermé et l'interrupteur de chauffage 50 étant ouvert, le module 46 agit sur le module de commande 66 du pulseur 20, de telle sorte que ce pulseur peut être commandé manuellement sur toute sa plage de commande. On peut donc régler le débit d'air sur toute l'amplitude de débit autorisé par le pulseur.

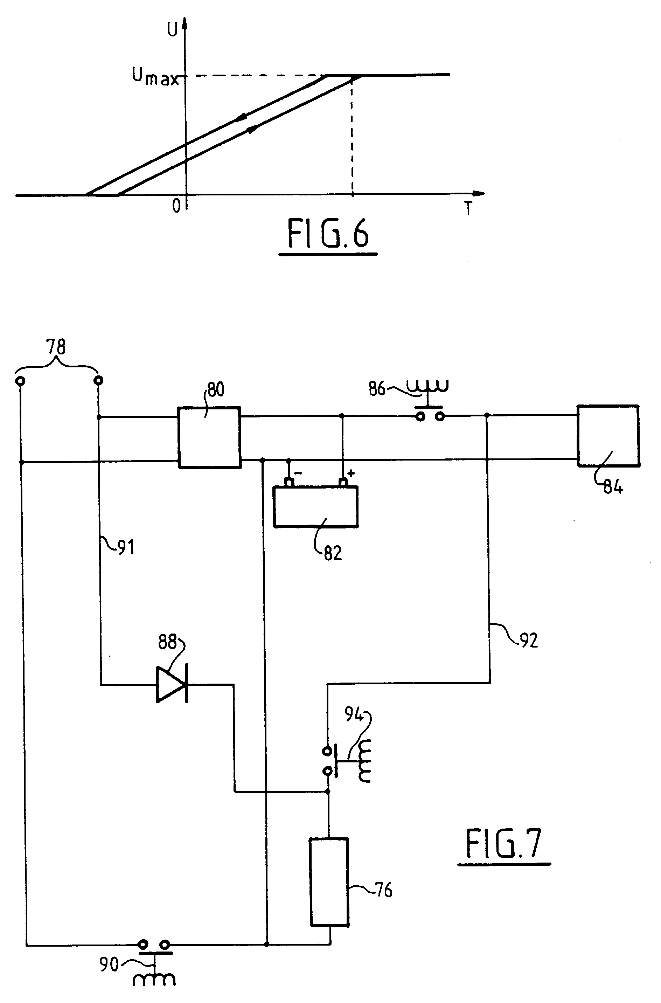

Lorsque l'interrupteur 48 est fermé et que l'interrupteur de chauffage 50 est également fermé, le module électronique 46 agit sur le module de commande 66 de manière que le pulseur puisse être commandé manuellement sur une plage dépendant de la température d'entrée d'air, et cela conformément au schéma de la figure 6. Comme montré sur la figure 6, le pulseur 20 est alimenté normalement à une tension maximale Uₘₐₓ correspondant à V1. Lorsque la température d'entrée d'air est supérieure à un seuil déterminé, le pulseur 20 est alimenté à la tension maximale précitée. Par contre, si la température d'entrée d'air descend en-dessous de la valeur de seuil précité, la tension d'alimentation du pulseur diminue progressivement pour éviter d'avoir un débit d'air trop important dans la branche de réchauffage 24. Il en résulte, comme déjà indiqué plus haut, que la valeur de la résistance CTP augmente, ce qui se traduit par une baisse de la consommation électrique.

Cette fonction de limitation du débit d'air du pulseur 20 permet d'avoir une puissance électrique consommée limitée, si nécessaire, ainsi qu'une température d'air soufflé supérieure à un minimum défini par la sensation de confort.

Lorsque l'interrupteur de contact 48 est ouvert et que l'interrupteur de préchauffage 52 est fermé et que l'horloge de programmation 58 est enclenchée, le véhicule étant stationné et branché sur le secteur, quelle que soit la position de la commande manuelle du pulseur, la tension aux bornes du pulseur est celle définie à la figure 6.

Le contacteur de chauffage 64 est enclenché si les conditions suivantes sont réunies: l'interrupteur de contact de réseau 48 est fermé et l'interrupteur de chauffage 50 est également fermé. Dans ces conditions, le voyant lumineux de chauffage 74 est allumé.

Le contacteur de préchauffage 60 est enclenché si les conditions suivantes sont réunies : l'interrupteur de contact de réseau 48 est ouvert, l'interrupteur de préchauffage 52 est fermé et l'horloge de programmation 58 est déclenchée. Dans ces conditions, le témoin lumineux de préchauffage 72 est allumé.

Le volet d'entrée d'air 76 est piloté par le motoréducteur 68 et peut prendre deux positions extrêmes : une position de fermeture de la conduite d'admission d'air extérieur 10 et une autre position de fermeture de la conduite 12 d'admission d'air recyclé, ainsi que toute position intermédiaire entre les deux positions extrêmes précitées.

Le volet 16 est placé dans la position "air extérieur", en laquelle la conduite 12 est fermée, si les conditions suivantes sont réunies : l'interrupteur de contact de réseau 48 est fermé, l'interrupteur de chauffage est ouvert et l'interrupteur de recyclage est également ouvert.

Dans les autres configurations, le volet d'entrée d'air 16 se met en position recyclage en laquelle la conduite d'admission d'air extérieur 10 est fermé, et cela afin d'améliorer les performances de chauffage et de préchauffage. Selon les cas, le volet 16 peut être mis dans une position 100 % recyclage ou dans une position intermédiaire.

Grâce à l'installation de l'invention, la puissance électrique consommée s'adapte à la puissance thermique désirée. Il est possible de régler l'installation de manière que la température minimale de l'air soufflé dans l'habitacle soit de 40°C par exemple. Pour une résistance CTP ayant une puissance nominale de 1600 W par exemple, on constate que la température de l'air soufflé est toujours supérieure à 40°C et que la puissance électrique consommée reste constante à moins de 5 % près.

On se réfère maintenant à la figure 7 qui montre une autre variante de réalisation dans laquelle l'installation comporte un seul radiateur électrique 76, du type à résistance CTP, pouvant être utilisé à la fois pour le mode chauffage et le mode préchauffage.

Dans ce cas, l'installation comprend une prise 78 propre à être branchée sur le secteur alternatif 220 V. Cette prise 78 permet d'alimenter un chargeur de batterie 80 propre à alimenter les batteries 82 embarquées sur le véhicule. Les batteries 82 permettent d'alimenter un ensemble 84 qui comprend notamment le moteur d'entraînement du véhicule. Cette alimentation se fait lorsqu'un contact 86 est fermé.

Par ailleurs, la prise 78 alimente, en parallèle, le radiateur 76 au travers d'un redresseur mono-alternance 88 lorsqu'un contact 90 est fermé. Le redresseur 88 est interposé sur une ligne 91 entre la prise 78 et le radiateur 76. Par ailleurs, le radiateur 76 peut être alimenté par les batteries 82 au travers d'une autre ligne 92 sur laquelle est placée un interrupteur de chauffage 94. Le radiateur 62 peut servir soit de radiateur de chauffage lorsque le contacteur de chauffage 94 est fermé, soit comme radiateur de préchauffage lorsque le contacteur de préchauffage 90 est fermé. Dans une forme de réalisation préférée, on s'arrange pour que la tension nominale Un du réseau de bord du véhicule soit égale à 110 V continu avec
0,8 x Un ≦ Uréelle ≦ 1,4 x Un.

Du fait qu'un redresseur mono-alternance est monté en série sur le réseau 220 V alternatif connecté au circuit du radiateur 76, les puissances électriques consommées en chauffage et en préchauffage seront égales.

On peut ainsi utiliser un seul radiateur électrique 110 V pour réaliser la fonction préchauffage et la fonction chauffage. Le circuit représenté à la figure 7 peut être monté sur un module de gestion 46 comme représenté précédemment à la figure 5.

On comprendra que l'invention trouve une application toute particulière au chauffage des véhicules automobiles à propulsion électrique. Il est bien évident qu'elle pourrait également s'adapter au chauffage d'un véhicule automobile fonctionnant avec un moteur à combustion interne.

## Revendications

1. Installation de chauffage de l'habitacle d'un véhicule automobile, du type comprenant une entrée d'air (14) munie d'un pulseur d'air (20), une sortie d'air (32) alimentant au moins une conduite de sortie (34,36,38) débouchant dans l'habitacle, une branche de transmission d'air (22) interposée entre l'entrée d'air (14) et la sortie d'air (32), une branche de réchauffage d'air (24) interposée entre l'entrée d'air (14) et la sortie d'air (32) et contenant des moyens de chauffage (40,42), ainsi qu'un volet de mixage (28) propre à répartir un flux d'air entre les deux branches précitées, caractérisée en ce que les moyens de chauffage comprennent un radiateur de chauffage (40) à résistance à coefficient de température positif (CTP) propre à être alimenté par une source de tension (82) embarquée sur le véhicule et un radiateur de préchauffage (42) propre à être alimenté par une source de tension extérieure fixe lorsque le véhicule est stationné.

2. Installation de chauffage selon la revendication 1, caractérisée en ce que le radiateur de préchauffage (42) est également du type à résistance CTP.

3. Installation de chauffage selon l'une des revendications 1 et 2, caractérisée en ce que le radiateur de chauffage (40) et le radiateur de préchauffage (42) sont deux radiateurs distincts disposés en série dans la branche de réchauffage d'air (24) par rapport au sens d'écoulement du flux d'air.

4. Installation selon l'une des revendications 1 et 2, caractérisée en ce que le radiateur de chauffage et le radiateur de préchauffage sont réalisés sous la forme d'un seul radiateur (76) à résistance CTP qui peut être alimenté soit sur une source de courant continu (82) embarquée sur le véhicule, soit sur une source de courant alternatif, extérieure au véhicule, au travers d'un redresseur de courant (88).

5. Installation selon l'une des revendications 1 à 4, caractérisée en ce qu'elle comprend un capteur de température (44) disposé dans l'entrée d'air (14) pour fournir un signal électrique représentatif de la température détectée et en ce que le pulseur (20) est piloté en tension par un module de commande (66) en fonction du signal électrique reçu, de telle sorte que la tension appliquée au pulseur (20) -et, par conséquent, le débit qu'il fournit- diminue lorsque la valeur de température détectée descend en-dessous d'un seuil déterminé.

6. Installation selon l'une des revendications 1 à 5, caractérisée en ce que la résistance CTP du radiateur de chauffage (40) est choisie de telle sorte qu'elle présente une courbe caractéristique représentative de la variation de la résistance (R) en fonction de la température (T) qui comporte un premier domaine (D₁) dans laquelle la valeur de la résistance est sensiblement constante dans un premier intervalle de température (I₁) et un second domaine (D₂) dans laquelle la valeur de la résistance augmente très fortement dans un second intervalle de température (I₂), les domaines (D₁ et D₂) de la courbe étant reliés par un coude et en ce que la résistance est choisie pour que son point de fonctionnement (P₀) soit proche du coude de la courbe.

7. Installation selon l'une des revendications 1 à 6, caractérisée en ce qu'elle comprend un module électronique de gestion (46) relié, en entrée, à un interrupteur de chauffage (50), à un interrupteur de préchauffage (52), à une commande de tension pulseur (56), à une horloge de programmation du préchauffage (58) et à un capteur de température d'air (44) et est relié, en sortie, à un contacteur de chauffage (64), à un contacteur de préchauffage (60) et à un module (66) de commande du pulseur (20).

8. Installation selon la revendication 7, caractérisée en ce que le module électronique de gestion (46) est réalisé de telle sorte que, l'interrupteur de chauffage (50) étant ouvert, le pulseur d'air (20) peut être commandé manuellement sur une plage de commande totale et que, l'interrupteur de chauffage (50) étant fermé, le pulseur peut être commandé manuellement sur une plage dépendant de la température détectée par le capteur (44) pour limiter le débit d'air du pulseur, dès que la valeur de température détectée descend en-dessous d'un certain seuil et que, l'interrupteur de préchauffage (52) étant fermé et l'horloge de programmation (58) étant déclenchée, le pulseur (20) peut être commandé manuellement sur une plage dépendant de la température détectée.

9. Installation selon l'une des revendications 7 et 8, caractérisée en ce que le module électronique de gestion (46) est opératoire pour enclencher le contacteur de chauffage (64) lorsque l'interrupteur de chauffage (50) est fermé et pour enclencher le contacteur de préchauffage (60) lorsque l'interrupteur de préchauffage (52) est fermé et que l'horloge de programmation de préchauffage (58) est déclenchée.

10. Installation selon l'une des revendications 7 à 9, comprenant en outre une conduite d'admission d'air extérieur (10) et une conduite d'admission d'air recyclé (12) alimentant l'entrée d'air (14) avec interposition d'un volet d'entrée d'air (16), caractérisée en ce que le module électronique de commande (46) est relié en sortie à un motoréducteur (68) commandant le volet (16), de sorte que le volet (16) obture la conduite d'admission d'air extérieur (10) lorsque l'interrupteur de chauffage (50) et/ou l'interrupteur de préchauffage (52) sont fermés et que le volet (16) obture la conduite d'admission d'air extérieur (10) et/ou la conduite d'admission d'air recyclé (12) dans les autres conditions.

## Claims

1. A heating installation for the cabin of a motor vehicle, of the type comprising an air inlet (14) having an air blower (20), an air outlet (32) feeding at least one outlet duct (34, 36, 38) which exhausts into the cabin, an air transmission branch (22) interposed between the air inlet (14) and the air outlet (32), an air heating branch (24) interposed between the air inlet (14) and the air outlet (32) and containing heating means (40, 42), together with a mixing valve (28) which is adapted to distribute an air stream between the two said branches, characterised in that the heating means comprise a heating radiator (40) having a positive temperature coefficient of resistance (PTC) and adapted to be supplied from a voltage source (82) carried on the vehicle, together with a preheating radiator (42) which is adapted to be supplied from a fixed external voltage source when the vehicle is stationary.

2. A heating installation according to Claim 1, characterised in that the preheating radiator (42) is also of the PTC resistance type.

3. A heating installation according to Claim 1 or Claim 2, characterised in that the heating radiator (40) and the preheating radiator (42) are two separate radiators which are arranged in series in the air heating branch (24) with respect to the direction of flow of the air stream.

4. An installation according to Claim 1 or Claim 2, characterised in that the heating radiator and the preheating radiator are made in the form of a single PTC resistance radiator (76), which is able to be supplied either from a source of direct current (82) carried on the vehicle, or from a source of alternating current outside the vehicle, via a current rectifier (88).

5. An installation according to one of Claims 1 to 4, characterised in that it includes a temperature sensor (44) disposed in the air inlet (14) so as to supply an electrical signal representing the temperature detected, and in that the blower (20) is governed in voltage by a control module (66) as a function of the electrical signal received, in such a way that the voltage applied to the blower (20) - and consequently its output - diminishes when the detected temperature value is reduced below a predetermined threshold value.

6. An installation according to one of Claims 1 to 5, characterised in that the PTC resistance of the heating radiator (40) is so selected that it has a characteristic curve which represents the variation of resistance (R) as a function of temperature (T), and which comprises a first region (D₁) in which the value of the resistance is substantially constant over a first temperature range (I₁), and a second region (D₂) in which the value of the resistance increases very sharply over a second range of temperature (I₂), the regions (D₁ and D₂) of the curve being connected by a bend, and in that the resistance is so selected that its operating point (P₀) is close to the bend in the curve.

7. An installation according to one of Claims 1 to 6, characterised in that it includes an electronic management module (46) which is connected at its input to a heating interruptor (50), to a preheating interruptor (52), to a preheating programming timer (58), and to an air temperature sensor (44), and which is connected at its output to a heating contactor (64), to a preheating contactor (60), and to a control module (66) for the blower (20).

8. An installation according to Claim 7, characterised in that the electronic management module (46) is so arranged that, when the heating interruptor (50) is open, the air blower (20) can be controlled manually over a range of total control, and that, when the heating interruptor (50) is closed, the blower can be controlled manually over a range which depends on the temperature detected by the sensor (44), so as to limit the air flow output of the blower after the detected temperature value has fallen below a particular threshold value, and that, when the preheating interruptor (52) is closed and the programming timer (58) has stopped, the blower (20) can be controlled manually over a range which depends on the temperature detected.

9. An installation according to Claim 7 or Claim 8, characterised in that the electronic management module (46) is operative to activate the heating contactor (64) when the heating interruptor (50) is closed, and to activate the preheating contactor (60) when the preheating interruptor (52) is closed and the preheating programming timer (50) has stopped.

10. An installation according to one of Claims 7 to 9, further including a fresh air admission duct (10) and a recycled air admission duct (12), feeding the air inlet (14) with an air inlet valve (16) interposed, characterised in that the electronic control module (46) is connected at its output to a motorised reduction gear unit (68) controlling the valve (16), in such a way that the valve (16) obturates the fresh air admission duct (10) when the heating interruptor (50) and/or the preheating interruptor (52) are closed, and in such a way that the valve (16) obturates the fresh air admission duct (10) and/or the recycled air admission duct (12) under all other conditions.

## Patentansprüche

1. Vorrichtung zur Heizung des Fahrgastraums eines Kraftfahrzeugs in der Ausführung mit einem Lufteinlaß (14), der mit einem Luftgebläse (20) versehen ist, einem Luftauslaß (32), der wenigstens einen in den Fahrgastraum führenden Auslaßkanal (34,36,38) speist, einem Luftzuleitungsstrang (22), der zwischen dem Lufteinlaß (14) und dem Luftauslaß (32) eingefügt ist, einem Lufterwärmungsstrang (24), der zwischen dem Lufteinlaß (14) und dem Luftauslaß (32) angeordnet ist und Heizungsmittel (40, 42) enthält, sowie mit einer Mischklappe (28), um den Luftstrom zwischen den beiden vorgenannten Strängen zu verteilen , **dadurch gekennzeichnet,** daß die Heizungsmittel einen Heizradiator (40) mit einem Widerstand mit positivem Temperaturkoeffizienten (PTK) umfassen, der durch eine an Bord des Fahrzeugs installierte Spannungsquelle (82) gespeist werden kann, und einen Vorheizradiator (42), der bei abgestelltem Fahrzeug durch eine externe Spannungsquelle gespeist werden kann.

2. Heizungsvorrichtung nach Anspruch 1 , **dadurch gekennzeichnet,** daß der Vorheizradiator (42) ebenfalls mit PTK-Widerstand ausgeführt ist.

3. Heizungsvorrichtung nach einem der Ansprüche 1 und 2, **dadurch gekennzeichnet,** daß der Heizradiator (40) und der Vorheizradiator (42) als zwei verschiedene Radiatoren ausgeführt sind, die, bezogen auf die Strömungsrichtung des Luftstroms, hintereinander im Lufterwärmungsstrang (24) angeordnet sind.

4. Heizungsvorrichtung nach einem der Ansprüche 1 und 2, **dadurch gekennzeichnet,** daß der Heizradiator und der vorheizradiator in Form eines einzigen Radiators (76) mit PTK-Widerstand ausgeführt sind, der entweder durch eine an Bord des Fahrzeugs installierte Gleichstromquelle (82) oder durch eine außerhalb des Fahrzeugs angeordnete Wechselstromquelle über einen Stromgleichrichter (88) gespeist werden kann.

5. Heizungsvorrichtung nach einem der Ansprüche 1 bis 4, **dadurch gekennzeichnet,** daß sie einen Temperaturfühler (44) enthält, der im Lufteinlaß (14) angeordnet ist, um ein für die erfaßte Temperatur repräsentatives elektrisches Signal zu liefern, und daß das Luftgebläse (20) durch einen Steuermodul (66) in Abhängigkeit von dem empfangenen elektrischen Signal spannungsgesteuert wird, so daß die an das Gebläse (20) angelegte Spannung - und folglich der von ihm gelieferte Luftdurchsatz - abnimmt, wenn der erfaßte Temperaturwert unter einen bestimmten Schwellenwert absinkt.

6. Heizungsvorrichtung nach einem der Ansprüche 1 bis 5, **dadurch gekennzeichnet,** daß der PTK-Widerstand des Heizradiators (40) so gewählt wird, daß er eine repräsentative Kennlinie für die Veränderung des Widerstands (R) in Abhängigkeit von der Temperatur (T) aufweist, die einen ersten Bereich (D₁) umfaßt, in dem der Wert des Widerstands in einem ersten Temperaturintervall (I₁) in etwa konstant ausfällt, und einen zweiten Bereich (D₂), in dem der Wert des Widerstands in einem zweiten Temperaturintervall (I₂) sehr stark ansteigt, wobei die Bereiche (D₁ und D₂) der Kennlinie durch einen Kurvenknick miteinander verbunden sind, und daß der Widerstand so gewählt wird, daß sein Betriebspunkt (P₀) in der Nähe des Kurvenknicks der Kennlinie liegt.

7. Heizungsvorrichtung nach einem der Ansprüche 1 bis 6, **dadurch gekennzeichnet,** daß sie eine elektronische Steuereinheit (46) enthält, die eingangsseitig mit einem Heizungsschalter (50), mit einem Vorheizschalter (52), mit einer Betätigungseinrichtung (56) für die Spannung des Luftgebläses, mit einer Programmieruhr (58) für die Vorheizung und mit einem Lufttemperaturfühler (44) verbunden ist und die ausgangsseitig mit einem Heizungskontakt (64), mit einem Vorheizkontakt (60) und mit einem Steuermodul (66) für das Luftgebläse (20) verbunden ist.

8. Heizungsvorrichtung nach Anspruch 7 , **dadurch gekennzeichnet,** daß die elektronische Steuereinheit (46) so ausgeführt ist, daß das Luftgebläse (20) bei geöffnetem Heizungsschalter (50) manuell in einem vollständigen Betätigungsbereich betätigt werden kann und daß das Luftgebläse bei geschlossenem Heizungsschalter (50) manuell in einem Bereich betätigt werden kann, der von der durch den Temperaturfühler (44) erfaßten Temperatur abhängig ist, um den Luftdurchsatz des Luftgebläses zu begrenzen, sobald der Wert der erfaßten Temperatur einen bestimmten Schwellenwert unterschreitet, und daß das Luftgebläse (20) bei geschlossenem Vorheizschalter (52) und bei ausgeschalteter Programmieruhr (58) manuell in einem Bereich betätigt werden kann, der von der erfaßten Temperatur abhängig ist.

9. Heizungsvorrichtung nach einem der Ansprüche 7 und 8, **dadurch gekennzeichnet,** daß die elektronische Steuereinheit (46) funktionsfähig ist, um den Heizungskontakt (64) einzuschalten, wenn der Heizungsschalter (50) geschlossen ist, und um den Vorheizkontakt (60) einzuschalten, wenn der Vorheizschalter (52) geschlossen und die Vorheizprogrammieruhr (58) ausgeschaltet ist.

10. Heizungsvorrichtung nach einem der Ansprüche 7 bis 9, welche außerdem eine Außenluftzuleitung (10) und eine Umluftzuleitung (12) umfaßt, die dem Lufteinlaß (14) Luft zuführen, wobei dazwischen eine Lufteinlaßklappe (16) angeordnet ist , **dadurch gekennzeichnet,** daß die elektronische Steuereinheit (46) ausgangsseitig mit einem Getriebemotor (68) für die Betätigung der Lufteinlaßklappe (16) verbunden ist, so daß die Klappe (16) die Außenluftzuleitung (10) verschließt, wenn der Heizungsschalter (50) und/oder der Vorheizschalter (52) geschlossen sind, und daß die Klappe (16) die Außenluftzuleitung (10) und/oder die Umluftzuleitung (12) unter den anderen Betriebsbedingungen verschließt.
